# EUROPEAN PATENT SPECIFICATION

(11) **EP 2 876 269 B1**
(45) Date of publication and mention of the grant of the patent: **19.04.2017**
(21) Application number: 14174962.2
(22) Date of filing: 30.06.2014
(51) Int. Cl.: F01L 13/00, F01L 1/26, B62K 11/04, F02B 61/02, F02B 75/16, F01L 1/18

(54) **STRADDLE-TYPE VEHICLE**
Grätschsitzfahrzeug
Véhicule de type deux-roues à selle

(30) Priority: 06.11.2013 JP 2013229979
(43) Date of publication of application: 27.05.2015
(73) Proprietor: Yamaha Hatsudoki Kabushiki Kaisha, Iwata-shi, Shizuoka 438-8501 (JP)
(72) Inventor: Taki, Atsushi, Iwata-shi, Shizuoka 438-8501 (JP)
(74) Representative: Grünecker Patent- und Rechtsanwälte PartG mbB

(56) References cited:
- EP-A1- 2 472 075
- EP-A1- 2 644 854
- EP-A1- 2 784 273
- JP-A- 2010 236 384
- US-A1- 2005 155 804
- US-A1- 2013 248 271
- US-A1- 2013 255 611

## Description

The present invention relates to a straddle-type vehicle, and more precisely relates to a straddle-type vehicle comprising a variable valve mechanism.

An example of a straddle-type vehicle is a scooter-type motorcycle (see US 2013/248271). There have been proposals for scooters equipped with variable valve mechanisms in recent years.

JP 2009-185639 A discloses a scooter-type motorcycle. This scooter has an engine equipped with a variable valve apparatus. The variable valve apparatus comprises an exhaust valve cam, a separate cam, a camshaft, and a solenoid. The separate cam is provided separately from the exhaust valve cam. The solenoid moves the separate cam in the axial direction of the camshaft.

JP 2010-236384 A also discloses a scooter-type motorcycle. This scooter has an engine equipped with a variable valve mechanism. The variable valve mechanism comprises an exhaust cam., a separate cam, a camshaft, and a solenoid. The separate cam is provided separately from the exhaust cam. The solenoid slides the separate cam along the camshaft.

In JP 2009-185639 A and JP 2010-236384 A, the solenoid is disposed to the side of the cylinder, and the output shaft (actuator rod) of the solenoid moves parallel to the cylinder axis. Accordingly, less space is needed for the solenoid in the left and right direction of the vehicle. That is, the solenoid can be disposed closer to the cylinder. However, the separate cam operated by the solenoid moves in a direction that intersects the cylinder axis (more specifically, the left and right direction of the vehicle). Therefore, the drive force of the solenoid must be transmitted through a link mechanism to the separate cam. This requires the solenoid to have a higher drive force, and this means that the solenoid ends up being larger (and particularly in the left and right direction of the vehicle).

With a scooter, the engine is disposed so as to be capable of pivoting with respect to the body frame. The engine is disposed under the seat. Therefore, when a larger solenoid is installed to the side of the engine, the dimensions in the left and right direction of the vehicle increase at the portion around the seat in the front-to-rear direction of the vehicle. More specifically, the dimensions in the left and right direction of the vehicle increase at the portion located under the seat in a side view of the vehicle.

In JP 2009-185639 A, the solenoid is exposed in a side view of the vehicle. In this case, when the vehicle is being driven, for example, stones and so forth kicked up by the movement of the vehicle can strike the solenoid, or dirty water splashed up by the movement of the vehicle can adhere to the solenoid.

In JP 2010-236384 A, the solenoid is hidden by a duct in a side view of the vehicle. That is, the duct is located outside the solenoid in the left and right direction of the vehicle. Accordingly, the dimensions in the left and right direction of the vehicle increase at the portion around the seat in the front-to-rear direction of the vehicle. More specifically, the dimensions in the left and right direction of the vehicle increase at the portion located under the seat in a side view of the vehicle.

A scooter comprises a foot rest component on which the rider places his feet while riding the vehicle. The foot rest component is located in front of and under the seat. Accordingly, rider comfort (specifically, ease of operation when getting on the vehicle, and a comfortable riding posture) is better with a scooter. However, if the dimensions in the left and right direction of the vehicle increase at the portion around the seat of a scooter (more specifically, the portion located under the seat), this can make the vehicle less comfortable. The reason is that when the rider is pushing the vehicle, or when the rider is getting on the vehicle, for example, the rider is located at the portion around the seat in the front-to-rear direction of the vehicle. That is, this increased size can get in the rider's way in moving the vehicle around or in operating it when getting on it.

It is an object of the present invention to protect the solenoid included in a variable valve mechanism while maintaining rider comfort in a straddle-type vehicle that is equipped with a variable valve mechanism and in which the engine unit is disposed so as to be capable of pivoting with respect to the body frame.

Such an object is achieved by a straddle-type vehicle according to claim 1. Further preferable embodiments are laid down in the dependent claims.

The straddle-type vehicle pertaining to an embodiment of the present invention comprises a body frame, a body cover, a seat, and an engine unit. The body cover covers the body frame. The seat is supported by the body frame. The engine unit is disposed so as to be capable of pivoting with respect to the body frame, and is located under the seat. The body frame includes a left frame component and a right frame component. The left frame component extends in the front-to-rear direction of the vehicle. The right frame component extends in the front-to-rear direction of the vehicle and is located to the right of the left frame component in the left and right direction of the vehicle. The left frame component and the right frame component include a lower frame component and an inclined frame component. The lower frame component extends in the front-to-rear direction, ahead of the engine unit. The inclined frame component extends rearward and upward from the rear end of the lower frame component. The body cover includes a foot rest component. The foot rest component is located lower than the seat and at least part of the foot rest component is superposed with the lower frame component in a plan view of the vehicle. The engine unit comprises a cylinder, a valve, and a variable valve mechanism. The valve opens and closes an intake passage or exhaust passage formed in the cylinder. The variable valve mechanism switches the amount of displacement of the valve. The variable valve mechanism includes a solenoid. The solenoid has an output shaft. The solenoid is disposed between the cylinder and either the left frame component or the right frame component in a plan view of the vehicle. The output shaft is capable of moving in a reciprocating manner in the left and right direction of the vehicle. The solenoid is superposed with the inclined frame component of one of the frame components in a side view of the vehicle, within the pivoting range of the engine unit.

With the straddle-type vehicle pertaining to an embodiment of the present invention, the solenoid can be protected while rider comfort is maintained.

FIG. 1 is a right side view of a motorcycle pertaining to an embodiment of the present invention;
FIG. 2 is a left side view of the body frame;
FIG. 3 is a right side view of the body frame;
FIG. 4 is a right side view illustrating the positional relation between the body frame, the engine unit, the rear wheel, and the fuel tank;
FIG. 5 is a front view illustrating the positional relation between the body frame, the engine unit, the fuel tank, and the body cover;
FIG. 6 is a plan view illustrating the positional relation between the body frame, the engine unit, the fuel tank, and the body cover;
FIG. 7 is a detail side view of part of the motorcycle shown in FIG. 1;
FIG. 8 is an oblique view illustrating the positional relation between the body frame, the engine unit, and a front cover;
FIG. 9 is a right side view illustrating the positional relation between the body frame, the engine unit, and the fuel tank;
FIG. 10 is an oblique view of a cylinder head body and a variable valve mechanism;
FIG. 11 is an oblique view illustrating the position of a switch pin when just one of two intake rocker arms pivots;
FIG. 12 is an oblique view illustrating the position of a switch pin when the two intake rocker arms pivot together; and;
FIG. 13 is a side view showing how a guide opening is formed in an under-seat cover.

There have been proposals for scooters equipped with variable valve mechanisms in recent years. A variable valve mechanism includes a solenoid. The drive force of the solenoid is used to switch members for driving valves.

With a scooter, the engine is disposed so as to be capable of pivoting with respect to the body frame. The engine is disposed under the seat. A foot rest component is disposed in front of the engine unit. Therefore, with a scooter, space for installing members is limited around the front of the engine unit, and the solenoid has to be installed in this limited space.

One possible way to install a solenoid is to make the output shaft of the solenoid parallel to the cylinder axis. In this case, the size of the engine unit, including the solenoid, in the left and right direction of the vehicle can be more compact than when the output shaft of the solenoid is parallel in the left and right direction of the vehicle. Therefore, the dimensions in the left and right direction of the vehicle can be reduced at the portion around the seat in the front-to-rear direction of the vehicle. More specifically, the dimensions in the left and right direction of the vehicle can be reduced at the portion located under the seat.

With a scooter, the cylinder axis extends in the front-to-rear direction of the vehicle. In this case, members to which the drive force of the solenoid is transmitted are disposed so that they can move in the left and right direction of the vehicle. Therefore, the drive force of the solenoid must be transmitted to the above-mentioned members via a link mechanism. This requires the solenoid to have a higher drive force. Accordingly, the solenoid becomes larger. The solenoid becomes larger in the left and right direction of the vehicle in particular.

With a scooter, the engine is disposed so that it is able to pivot with respect to the body frame. Also, the engine is located under the seat. Therefore, if a larger solenoid is installed to the side of the engine, the dimensions in the left and right direction of the vehicle will be larger at the portion around the seat in the front-to-rear direction of the vehicle. More specifically, the dimensions in the left and right direction of the vehicle will be larger at the portion located under the seat. Also, the link mechanism is located to the side of the engine unit. Therefore, because the link mechanism is installed, the dimensions in the left and right direction of the vehicle become larger at the portion around the seat in the front-to-rear direction of the vehicle. More specifically, the dimensions in the left and right direction of the vehicle become larger at the portion located under the seat.

A scooter comprises a foot rest component. The foot rest component is located in front of and under the seat. Accordingly, rider comfort is better with a scooter. More specifically, operation when getting on the vehicle is easier, and the riding posture is more comfortable.

However, with a scooter, if the dimensions in the left and right direction of the vehicle become larger at the portion around the seat in the front-to-rear direction of the vehicle, this can make the vehicle less comfortable. The reason is that when the rider is pushing the vehicle, or when the rider is riding the vehicle, for example, the rider is located at the portion around the seat in the front-to-rear direction of the vehicle. That is, this increased size can get in the rider's way in moving the vehicle around or in operating it when getting on it.

Also, it is not just that the solenoid should be disposed so that the dimensions in the left and right direction of the vehicle are smaller. When the vehicle is being driven, for example, stones and so forth kicked up by the movement of the vehicle can strike the solenoid, or dirty water splashed up by the movement of the vehicle can adhere to the solenoid. The probability that such a problem will be encountered rises as the solenoid becomes larger.

In view of this, the inventors discovered a structure in which the output shaft of the solenoid is disposed so that it can move in the left and right direction of the vehicle, and the solenoid is disposed at a location that is protected by the body frame, while avoiding an increase in the size of the solenoid.

The straddle-type vehicle pertaining to an embodiment of the present invention will now be described through reference to the drawings. In this embodiment, a scooter type of motorcycle will be described as an example of a straddle-type vehicle. Portions in the drawings that are the same or equivalent will be numbered the same, and these members will not be described more than once.

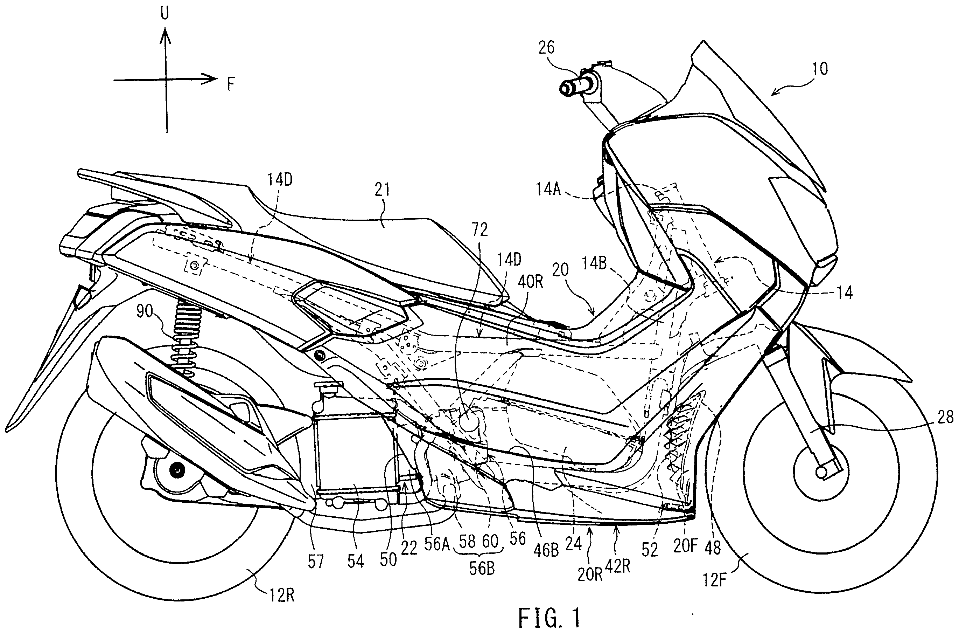

FIG. 1 is a right side view of a motorcycle 10 pertaining to an embodiment of the present invention. In the following description, the terms front, rear, left, and right refer to those directions as seen by a rider seated on a seat 21 of the motorcycle 10. In FIG. 1, the arrow F indicates the front direction of the motorcycle 10, and the arrow U refers to the up direction of the motorcycle 10.

As shown in FIG. 1, the motorcycle 10 comprises a front wheel 12F, a rear wheel 12R, a body frame 14, a body cover 20, the seat 21, an engine unit 22, and a fuel tank 24.

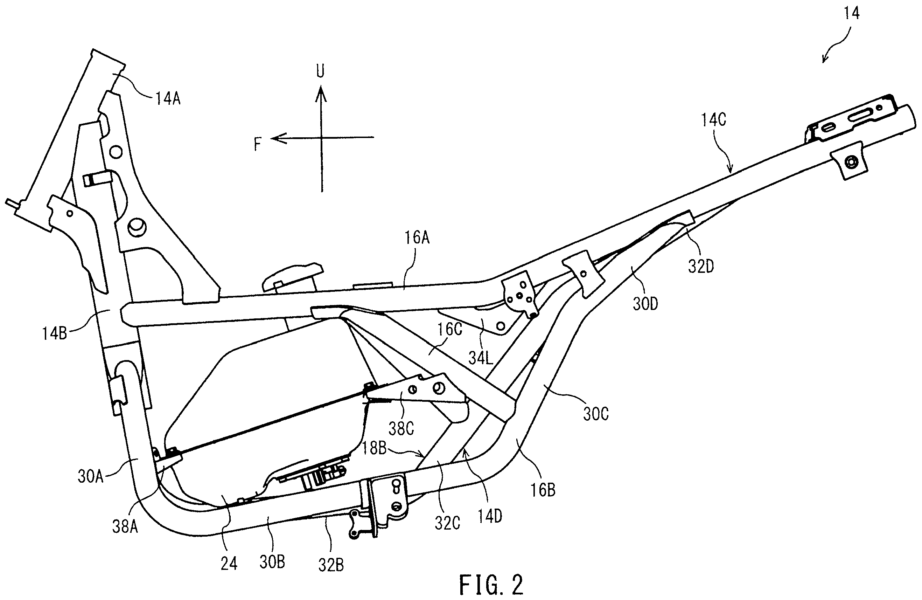

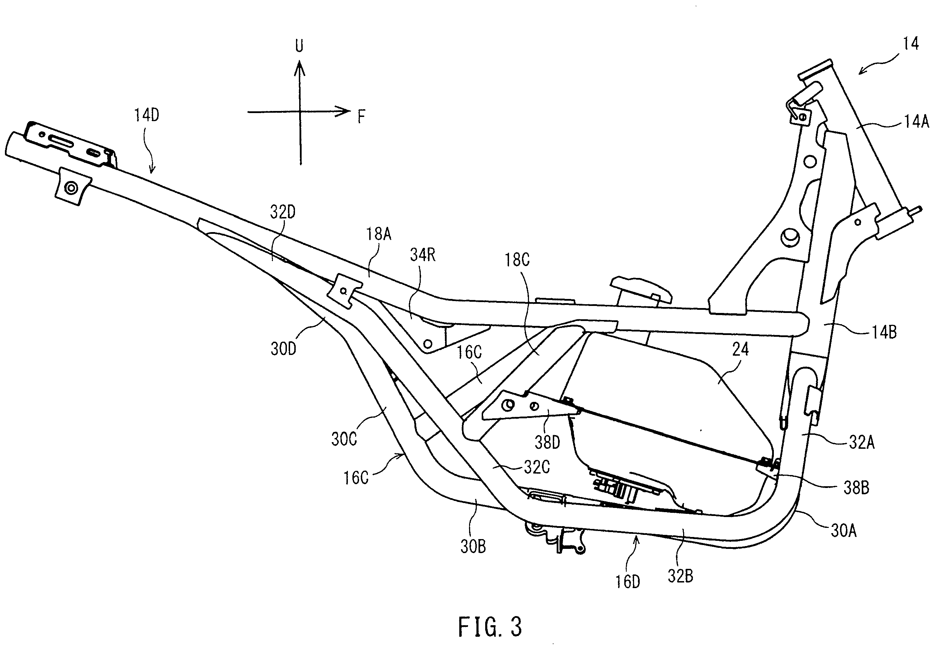

As shown in FIGS. 2 and 3, the body frame 14 comprises a head pipe 14A, a front frame 14B, a left frame 14C, and a right frame 14D.

As shown in FIGS. 2 and 3, the head pipe 14A is disposed at the front part of the body frame 14. A steering shaft is inserted into the head pipe 14A. A handlebar 26 (see FIG. 1) is disposed at the upper end of the steering shaft. A front fork 28 (see FIG. 1) is disposed at the lower end of the steering shaft. As shown in FIG. 1, the front fork 28 rotatably supports the front wheel 12F. As the handlebar 26 is turned, the front wheel 12F also turns in a plan view of the vehicle.

As shown in FIGS. 2 and 3, the front frame 14B is connected to the head pipe 14A. The front frame 14B extends downward from the head pipe 14A.

The left frame 14C will now be described through reference to FIG. 2. The left frame 14C extends in the front-to-rear direction of the vehicle. The left frame 14C includes an upper-left frame 16A, a lower-left frame 16B, and a left reinforcing frame 16C.

The upper-left frame 16A is connected to the front frame 14B. The upper-left frame 16A extends rearward from the front frame 14B.

The lower-left frame 16B is connected to the front frame 14B. The lower-left frame 16B extends rearward from the front frame 14B. The rear end of the lower-left frame 16B is connected to the upper-left frame 16A.

The lower-left frame 16B includes a front part 30A, a middle part 30B, an inclined part 30C, and a rear part 30D.

The front part 30A is connected to the front frame 14B. The front part 30A extends downward from the front frame 14B.

The middle part 30B extends rearward from the lower end of the front part 30A. The middle part 30B extends in the front-to-rear direction of the vehicle, ahead of the engine unit 22.

The inclined part 30C extends rearward and diagonally upward from the rear end of the middle part 30B.

The rear part 30D extends rearward from the rear end of the inclined part 30C. The rear part of the rear part 30D is connected to the upper-left frame 16A.

The left reinforcing frame 16C is connected to the upper-left frame 16A and the lower-left frame 16B.

The right frame 14D will be described through reference to FIG. 3. The right frame 14D extends in the front-to-rear direction of the vehicle. The right frame 14D includes an upper-right frame 18A, a lower-right frame 18B, and a right reinforcing frame 18C.

The upper-right frame 18A is connected to the front frame 14B. The upper-right frame 18A extends rearward from the front frame 14B.

The lower-right frame 18B is connected to the front frame 14B. The lower-right frame 18B extends rearward from the front frame 14B. The rear end of the lower-right frame 18B is connected to the upper-right frame 18A.

The lower-right frame 18B includes a front part 32A, a middle part 32B, an inclined part 32C, and a rear part 32D.

The front part 32A is connected to the front frame 14B. The front part 32A extends downward from the front frame 14B.

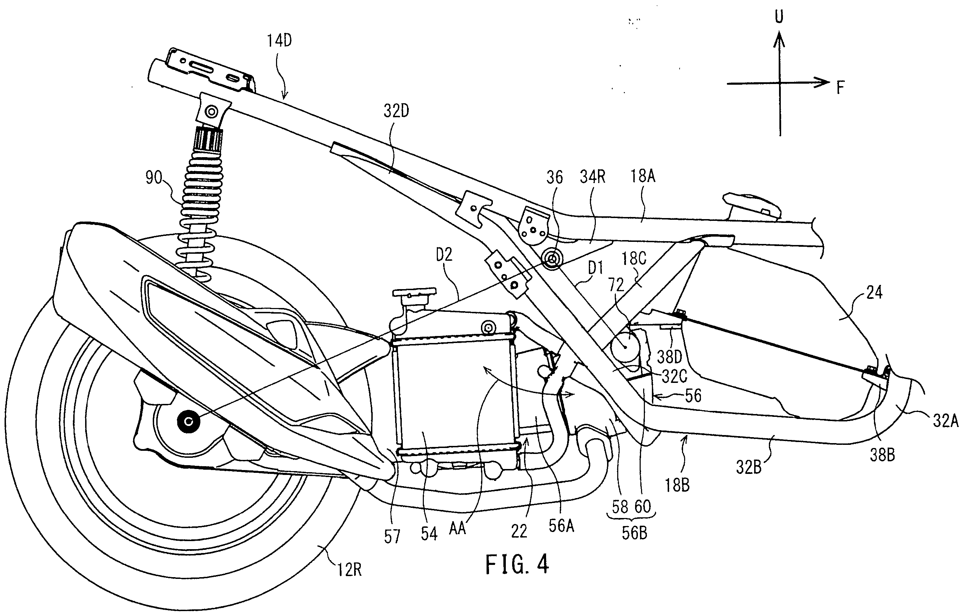

The middle part 32B extends rearward from the lower end of the front part 32A. As shown in FIG. 4, the middle part 32B extends in the front-to-rear direction of the vehicle, ahead of the engine unit 22.

The inclined part 32C extends rearward and diagonally upward from the rear end of the middle part 32B.

The rear part 32D extends rearward from the rear end of the inclined part 32C. The rear part of the rear part 32D is connected to the upper-right frame 18A.

The right reinforcing frame 18C is connected to the upper-right frame 18A and the lower-right frame 18B.

As shown in FIG. 2, a support 34L is attached to the upper-left frame 16A. As shown in FIG. 3, a support 34R is attached to the upper-right frame 18A. As shown in FIG. 4, a pivot shaft 36 is supported by the support 34L and the support 34R. The pivot shaft 36 extends in the left and right direction of the vehicle. The pivot shaft 36 is located ahead of the inclined part 30C and the inclined part 32C.

As shown in FIG. 4, the engine unit 22 is supported so as to be capable of pivoting around the pivot shaft 36 with respect to the body frame 14. The pivot shaft 36 supports the engine unit 22 pivotably with respect to the body frame 14. In FIG. 4, the arrow AA indicates the pivot direction of the engine unit 22.

As shown in FIG. 4, the rear wheel 12R is rotatably supported at the rear end of the engine unit 22. That is, the rear wheel 12R is supported so as to be capable of pivoting around the pivot shaft 36 with respect to the body frame 14, along with the engine unit 22. The drive force of the engine unit 22 is transmitted to the rear wheel 12R, causing the rear wheel 12R to rotate.

As shown in FIG. 1, the engine unit 22 is disposed under the seat 21. The seat 21 is supported by the body frame 14.

As shown in FIG. 2, a left-front bracket 38A is attached to the lower-left frame 16B. As shown in FIG. 3, a right-front bracket 38B is attached to the lower-right frame 18B. As shown in FIG. 2, a left-rear bracket 38C is attached to the left reinforcing frame 16C. As shown in FIG. 3, a right-rear bracket 38D is attached to the right reinforcing frame 18C. The left-front bracket 38A, the right-front bracket 38B, the left-rear bracket 38C, and the right-rear bracket 38D allow the fuel tank 24 to be attached to the body frame 14 (see FIGS. 2 and 3). As shown in FIGS. 1 and 4, the fuel tank 24 is disposed ahead of the engine unit 22.

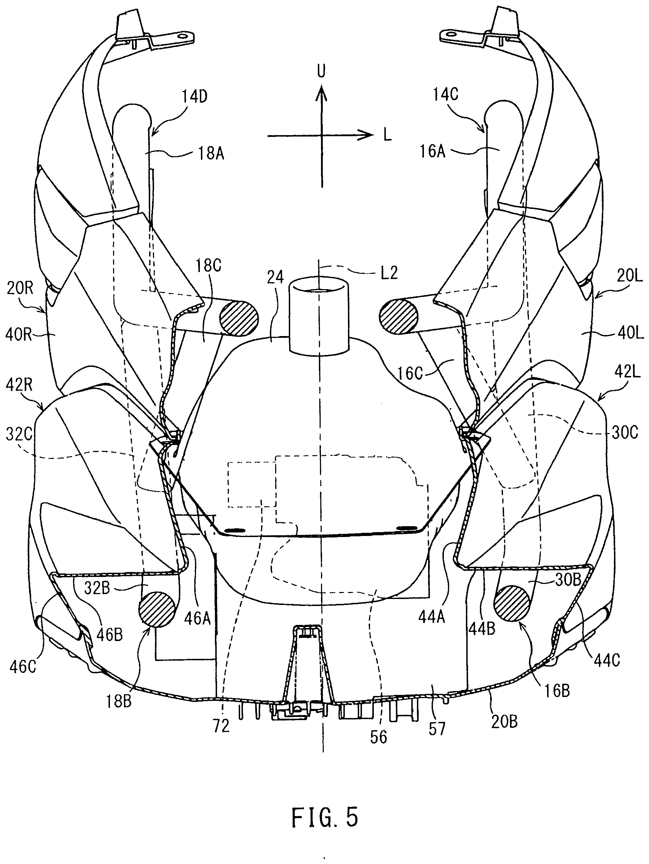

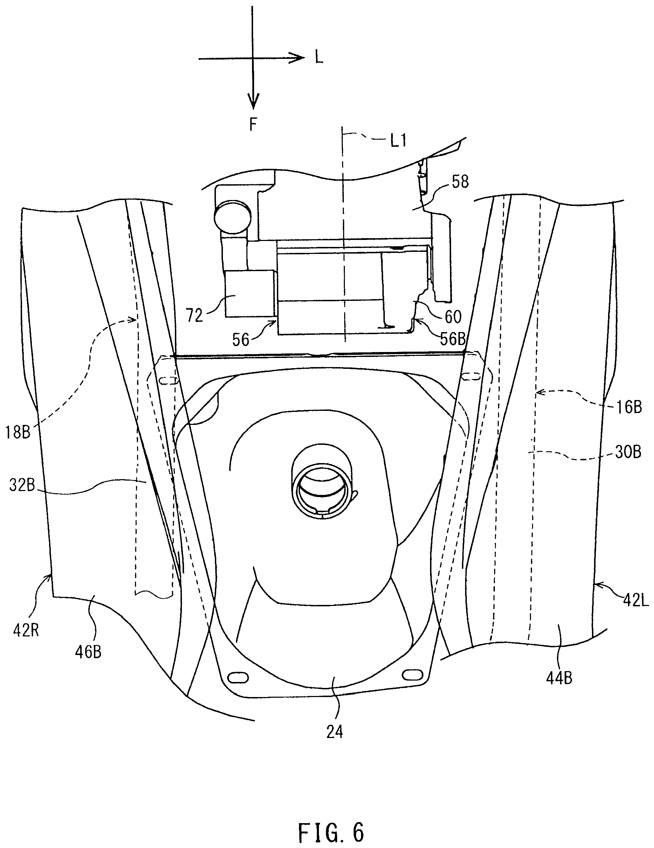

As shown in FIG. 1, the body cover 20 covers the body frame 14. As shown in FIGS. 5 and 6, the body cover 20 includes a left side cover 20L, a right side cover 20R, and a bottom cover 20B.

As shown in FIGS. 1, 5, and 6, the left side cover 20L and the right side cover 20R extend in the front-to-rear direction of the vehicle. The left side cover 20L and the right side cover 20R are disposed separated in the left and right direction of the vehicle. The body frame 14 and the fuel tank 24 are disposed between the left side cover 20L and the right side cover 20R. That is, the left side cover 20L and the right side cover 20R cover the body frame 14 and the fuel tank 24 from the outside in the left and right direction of the vehicle.

As shown in FIG. 5, a space is formed between the left side cover 20L and the body frame 14. A space is also formed between the left side cover 20L and the fuel tank 24. A space is also formed between the right side cover 20R and the body frame 14. A space is also formed between the right side cover 20R and the fuel tank 24.

As shown in FIG. 1, the left side cover 20L and the right side cover 20R are disposed lower than the seat 21.

As shown in FIG. 5, the left side cover 20L includes an upper-left side cover 40L and a lower-left side cover 42L.

As shown in FIG. 5, the upper-left side cover 40L is disposed above the lower-left side cover 42L. In the left and right direction of the vehicle, the lower end of the upper-left side cover 40L is superposed with the upper end of the lower-left side cover 42L. The upper-left side cover 40L and the lower-left side cover 42L are linked by screws, etc.

As shown in FIGS. 5 and 6, the lower-left side cover 42L includes an inner side cover 44A, a foot board 44B, and an outer side cover 44C.

As shown in FIG. 5, the inner side cover 44A is formed integrally with the foot board 44B. The inner side cover 44A extends upward from the right end of the foot board 44B.

The foot board 44B is superposed with part of the body frame 14 in a plan view of the vehicle. The rider places his left foot on the foot board 44B while riding the vehicle.

As shown in FIG. 5, the outer side cover 44C is formed integrally with the foot board 44B. The outer side cover 44C extends downward from the left end of the foot board 44B.

The right side cover 20R includes an upper-right side cover 40R and a lower-right side cover 42R.

As shown in FIG. 5, the upper-right side cover 40R is disposed above the lower-right side cover 42R. In the left and right direction of the vehicle, the lower end of the upper-right side cover 40R is superposed with the upper end of the lower-right side cover 42R. The upper-right side cover 40R and the lower-right side cover 42R are linked by screws, etc.

As shown in FIG. 5, the lower-right side cover 42R includes an inner side cover 46A, a foot board 46B, and an outer side cover 46C.

As shown in FIG. 5, the inner side cover 46A is formed integrally with the foot board 46B. The inner side cover 46A extends upward from the left end of the foot board 46B.

The foot board 46B is superposed with part of the body frame 14 in a plan view of the vehicle. The rider places his right foot on the foot board 46B while riding the vehicle.

As shown in FIG. 5, the outer side cover 46C is formed integrally with the foot board 46B. The outer side cover 46C extends downward from the right end of the foot board 46B.

As is clear from the above description, the foot rest component in the present invention includes the foot board 44B and the foot board 46B.

As shown in FIG. 5, the bottom cover 20B is located at the lower part of the body cover 20.

As shown in FIG. 5, the bottom cover 20B is disposed lower than the body frame 14. This forms a space between the bottom cover 20B and the body frame 14.

As shown in FIGS. 1 and 5, the bottom cover 20B is disposed lower than the front part of the engine unit 22 (more specifically, the cylinder (discussed below)) and the fuel tank 24. This forms a space between the bottom cover 20B and the fuel tank 24. A space is also formed between the front part of the engine unit 22 and the bottom cover 20B.

In the left and right direction of the vehicle, the left end of the bottom cover 20B is connected to the lower end of the outer side cover 44C, and the right end of the bottom cover 20B is connected to the lower end of the outer side cover 46C. As shown in FIG. 5, in the left and right direction of the vehicle, the left end of the bottom cover 20B is superposed with the lower end of the outer side cover 44C, and the right end of the bottom cover 20B is superposed with the lower end of the outer side cover 46C. The bottom cover 20B is linked by screws or the like to the outer side cover 44C and the outer side cover 46C.

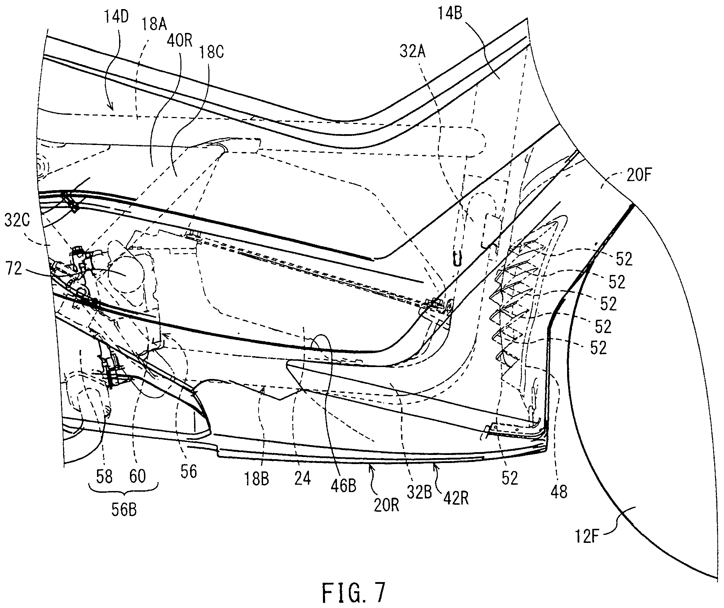

As shown in FIGS. 1 and 7, the body cover 20 further includes a front cover 20F. The front cover 20F is located at the front and lower part of the body cover 20. The front cover 20F is disposed ahead of the left side cover 20L and the right side cover 20R. That is, the front cover 20F covers a space formed between the left side cover 20L and the right side cover 20R from the front.

The front cover 20F is located to the rear of the front wheel 12F. The front wheel 12F is located ahead of the left frame 14C and the right frame 14D. The front wheel 12F is located ahead of the front part 32A of the lower-right frame 18B and the front part 30A of the lower-left frame 16B. The front wheel 12F is located ahead of the front frame 14B. The front wheel 12F is also located ahead of the fuel tank 24.

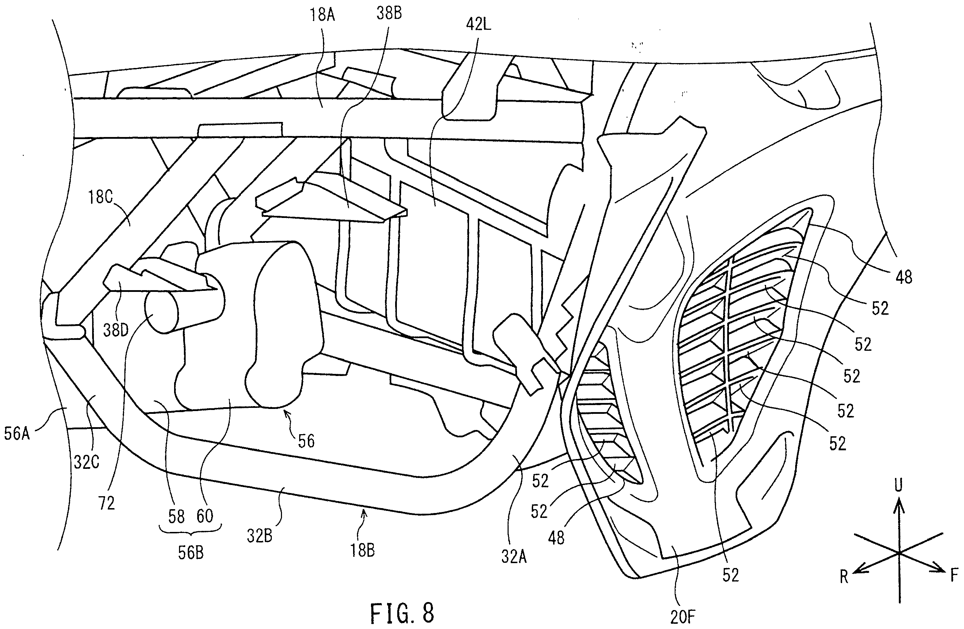

As shown in FIGS. 7 and 8, a guide hole 48 is formed in the front cover 20F. In this embodiment, two guide holes 48 are formed. The two guide holes 48 are formed in left and right symmetry.

The result of forming the guide holes 48 in the front cover 20F is that ram air produced as the vehicle is ridden, that is, air flowing from ahead of the vehicle to the front cover 20F when the vehicle is ridden, is guided through the guide holes 48 to inside the body cover 20. That is, in this embodiment the guide holes 48 function as guide components.

The ram air guided into the body cover 20 flows through the inside of the body cover 20 toward the rear of the vehicle. The ram air guided into the body cover 20 flows through the space formed between the foot board 44B and the bottom cover 20B, toward the rear of the vehicle. The ram air guided into the body cover 20 also flows through the space formed between the fuel tank 24 and the bottom cover 20B, toward the rear of the vehicle. The ram air guided into the body cover 20 also flows through the space formed between the front part of the engine unit 22 (more specifically, the cylinder) and the bottom cover 20B, toward the rear of the vehicle. The ram air guided into the body cover 20 also flows through the space formed between the foot board 46B and the bottom cover 20B, toward the rear of the vehicle. The ram air guided into the body cover 20 also flows through the space formed between the left side cover 20L and the fuel tank 24, toward the rear of the vehicle. The ram air guided into the body cover 20 also flows through the space formed between the right side cover 20R and the fuel tank 24, toward the rear of the vehicle.

The space formed between the left side cover 20L and the right side cover 20R is connected to the space to the rear of the left side cover 20L and the right side cover 20R. That is, the body cover 20 allows ram air guided from the guide holes 48 into the body cover 20 to be discharged to the rear of the body cover 20. In this embodiment, the opening defined by the rear end of the left side cover 20L, the rear end of the right side cover 20R, and the rear end of the bottom cover 20B functions as a discharge component 50. As shown in FIG. 1, the discharge component 50 is superposed with the engine unit 22 in a side view of the vehicle.

As shown in FIG. 8, the guide holes 48 are partitioned in the up and down direction by a plurality of fins 52. The fins 52 are spaced apart in the up and down direction. The fins 52 extend in the left and right direction. The fins 52 are disposed parallel to each other. The front end of each fin 52 is located higher than the rear end. Consequently, ram air produced when the vehicle is ridden is conducted downward and rearward when passing through the guide holes 48.

As shown in FIG. 8, the two guide holes 48 are formed at the same position in the up and down direction. As shown in FIGS. 1 and 8, the guide holes 48 are located ahead of the engine unit 22. As shown in FIG. 1, the guide holes 48 are located under the seat 21. As shown in FIG. 1, the guide holes 48 are located ahead of the foot board 46B and the fuel tank 24 in a side view of the vehicle.

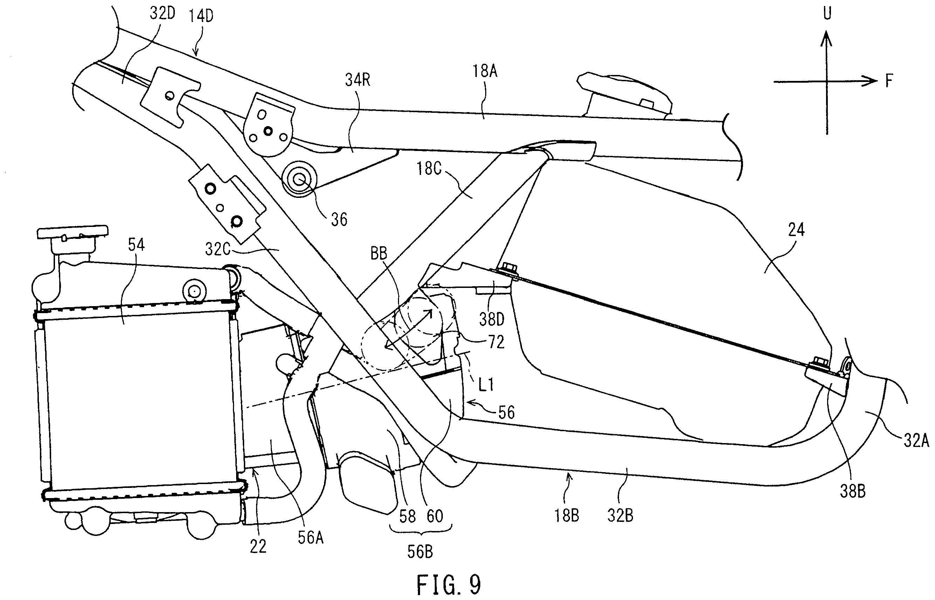

Next, the engine unit 22 will be described in detail through reference to FIGS. 9 to 12. The engine unit 22 comprises an engine and a constantly variable transmission. In this embodiment, the engine is a four-stroke single-cylinder engine. The engine in this embodiment is water-cooled. Therefore, as shown in FIG. 9, a radiator 54 is disposed to the right of the engine unit 22.

As shown in FIG. 9, the engine unit 22 comprises a cylinder component 56. The cylinder component 56 guides the linear reciprocal motion of a piston. As shown in FIG. 9, the axis L1 of the cylinder component 56 is inclined with respect to the front-to-rear direction of the vehicle. The axis L1 extends upward and forward. The front end of the cylinder component 56 is located higher than the rear end of the cylinder component 56. The axis L1 is the center axis of the spaced formed in the cylinder component 56 in which the piston moves reciprocally.

The cylinder component 56 includes a cylinder body 56A and a cylinder head 56B.

The cylinder body 56A is disposed at the front end of a crankcase 57 that houses a crankshaft. The piston is disposed inside the cylinder body 56A.

The cylinder head 56B is disposed at the front end of the cylinder body 56A. The cylinder head 56B includes a head main body 58 and a head cover 60.

The head main body 58 is disposed at the front end of the cylinder body 56A. The head main body 58 forms a combustion chamber along with the piston.

The head cover 60 is disposed at the front end of the head main body 58.

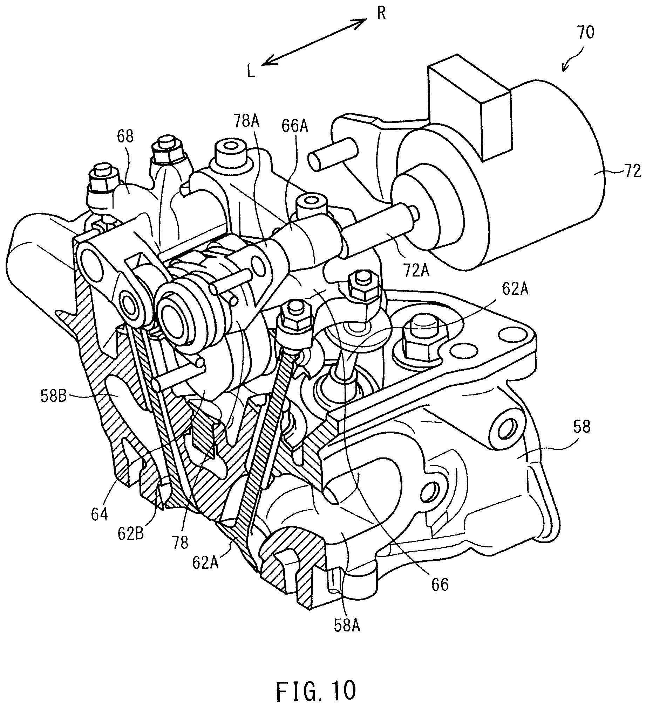

As shown in FIG. 10, an intake passage 58A and an exhaust passage 58B are formed in the head main body 58. An intake valve 62A is disposed in the intake passage 58A. In the example shown in FIG. 10, two intake valves 62A are provided. An exhaust valve 62B is disposed in the exhaust passage 58B. In the example shown in FIG. 10, two exhaust valves 62B are provided. A camshaft 64 is disposed in the head main body 58. The camshaft 64 extends in the left and right direction of the vehicle. In FIG. 10, the hatched surfaces are a cross section. That is, FIG. 10 is a diagram illustrating the internal structure of the head main body 58.

The intake passage 58A is connected to the combustion chamber via a connection opening. In the example shown in FIG. 10, the intake passage 58A is connected to the combustion chamber via two connection openings. The connection openings are opened and closed by the intake valves 62A. More specifically, as the camshaft 64 rotates, a rocker arm 66 pivots. Consequently, the intake valves 62A open and close the connection openings.

The exhaust passage 58B is connected to the combustion chamber via a connection opening. In the example shown in FIG. 10, the exhaust passage 58B is connected to the combustion chamber via two connection openings. The connection openings are opened and closed by the exhaust valves 62B. More specifically, as the camshaft 64 rotates, a rocker arm 68 pivots. Consequently, the exhaust valves 62B open and close the connection openings.

As shown in FIG. 10, the engine unit 22 further comprises a variable valve mechanism 70. The variable valve mechanism 70 switches the amount of displacement of the intake valves 62A. In the example shown in FIG. 10, the variable valve mechanism 70 switches the amount of displacement of the two intake valves 62A. The variable valve mechanism 70 includes a solenoid 72, a switch pin 74, a coil spring 76, and a rocker arm 78.

The solenoid 72 includes an output shaft 72A. The output shaft 72A is disposed so as to be capable of moving in a reciprocating manner in the left and right direction of the vehicle. As shown in FIGS. 6 to 9, the solenoid 72 is attached to the cylinder head 56B. More specifically, as shown in FIGS. 6 to 9, the solenoid 72 is attached to the head cover 60.

As shown in FIG. 6, the solenoid 72 is disposed to the right of the axis L1 in a plan view of the vehicle. The solenoid 72 is disposed between the cylinder head 56B and the lower-right frame 18B in a plan view of the vehicle. More specifically, the solenoid 72 is disposed between the head cover 60 and the lower-right frame 18B in a plan view of the vehicle.

As shown in FIG. 5, the solenoid 72 is disposed to the left of the inclined part 32C in the left and right direction of the vehicle. The solenoid 72 is disposed closer to the lower-right frame 18B than a reference line L2 in the left and right direction of the vehicle. The reference line L2 extends in a top-to-bottom direction and passes through the center of the fuel tank 24 in the left and right direction of the vehicle. The solenoid 72 is superposed with the fuel tank 24 in a front view of the vehicle.

FIG. 9 shows a state in which no rider is mounted, and the vehicle is erect. The position of the engine unit 22 at this point will be described below as the position when the engine unit 22 has not pivoted.

As shown in FIG. 9, the solenoid 72 is located ahead of the inclined part 32C in a side view of the vehicle. The solenoid 72 is located ahead of the right reinforcing frame 18C in a side view of the vehicle. The solenoid 72 is located above the axis L1 in a side view of the vehicle. The solenoid 72 pivots along with the engine unit 22. In FIG. 9, the arrow BB indicates the pivot direction of the solenoid 72. When the engine unit 22 pivots, the solenoid 72 pivots away from the inclined part 32C and toward the inclined part 32C in a side view of the vehicle, using the position when the engine unit 22 has not pivoted as a reference.

As shown in FIG. 4, the rear part of the engine unit 22 is supported on the body frame 14 by a rear suspension 90. The rear suspension 90 is able to expand and contract. The rear suspension 90 expands and contracts under impact from the road surface, and cushions these impacts. The rear suspension 90 contracts when the rider mounts, for example. When the rear suspension 90 contracts, the solenoid 72 moves closer to the inclined part 32C in a side view of the vehicle. When the rear suspension 90 expands, the solenoid 72 moves away from the inclined part 32C in a side view of the vehicle.

The solenoid 72 is superposed with the inclined part 32C in a side view of the vehicle when the solenoid 72 pivots toward the inclined part 32C in a side view of the vehicle. The amount by which the solenoid 72 pivots toward the inclined part 32C in a side view of the vehicle is greater than the amount by which the solenoid 72 pivots away from the inclined part 32C in a side view of the vehicle. In the example shown in FIG. 9, the solenoid 72 is superposed with the inclined part 32C in a side view of the vehicle upon pivoting toward the inclined part 32C, but the solenoid 72 may be superposed with the inclined part 32C at the position where the engine unit 22 has not pivoted, for example. That is, the solenoid 72 may be superposed with the inclined part 32C in a side view of the vehicle either when the engine unit 22 has already pivoted or when the engine unit 22 has not pivoted. The solenoid 72 may be superposed with the inclined part 32C in a side view of the vehicle at any position within the pivot range of the engine unit 22.

As shown in FIGS. 1, 5, and 6, the right side cover 20R is superposed with the solenoid 72 in a side view of the vehicle. More specifically, the lower-right side cover 42R is superposed with the solenoid 72 in a side view of the vehicle.

As shown in FIG. 4, the distance D1 between the axis of the solenoid 72 and the axis of the pivot shaft 36 in a side view of the vehicle is shorter than the distance D2 between the axis of the axle of the rear wheel 12R and the axis of the pivot shaft 36.

In a side view of the vehicle, the pivot shaft 36 is disposed ahead of the rear end of the cylinder head 56B in the front-to-rear direction of the vehicle. Accordingly, the distance between the axis of the solenoid 72 and the axis of the pivot shaft 36 can be shortened. As a result, the pivot range of the solenoid 72 can be made smaller.

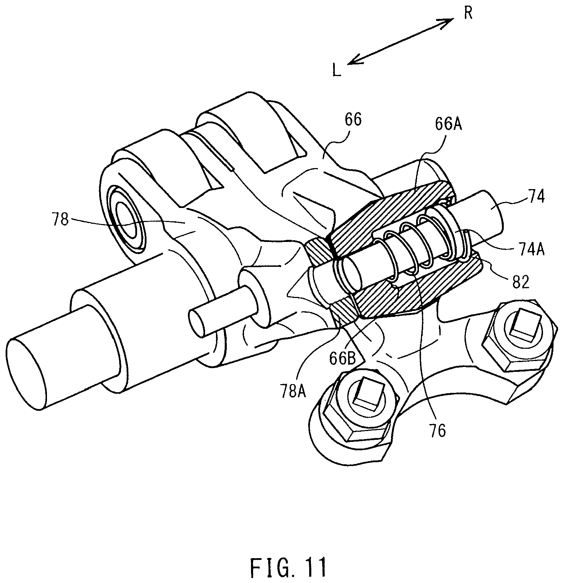

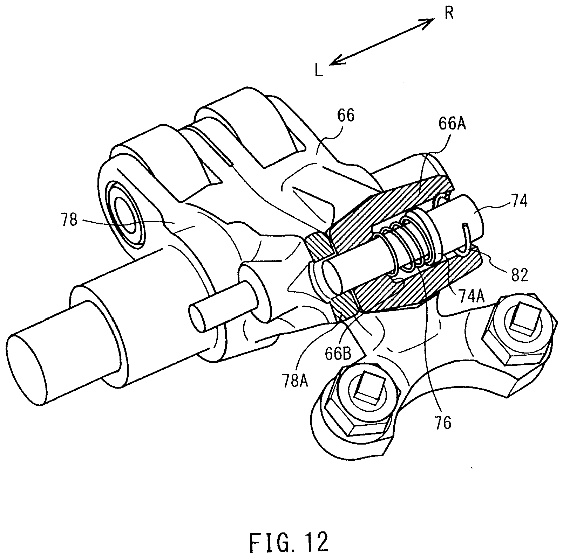

As shown in FIGS. 11 and 12, the rocker arm 78 is disposed next to the rocker arm 66 in the left and right direction of the vehicle. The rocker arm 78 has a different cam profile from that of the rocker arm 66.

As shown in FIGS. 11 and 12, the rocker arm 66 includes a cylindrical part 66A. The rocker arm 78 includes a cylindrical part 78A. The cylindrical part 66A and the cylindrical part 78A extend in the left and right direction of the vehicle. In FIGS. 11 and 12, the hatched surfaces are a cross section. That is, FIGS. 11 and 12 are diagrams illustrating the internal structure of the cylindrical part 66A and the cylindrical part 78A.

As shown in FIGS. 11 and 12, the switch pin 74 is inserted into the cylindrical part 66A. In this state, the switch pin 74 is inserted through the coil spring 76. The switch pin 74 is disposed movably in the left and right direction of the vehicle.

As shown in FIGS. 11 and 12, the switch pin 74 includes an annular stopper 74A. A step 66B is formed on the inner peripheral face of the cylindrical part 66A. The coil spring 76 is disposed between the stopper 74A and the step 66B. An annular stopper 82 is fixed to the inner peripheral face of the cylindrical part 66A. As shown in FIG. 11, the biasing force of the coil spring 76 brings the stopper 74A into contact with the stopper 82. That is, the stopper 82 prevents the switch pin 74 from coming loose from the cylindrical part 66A.

As shown in FIG. 11, in a state in which the stopper 74A is in contact with the stopper 82, one end face of the switch pin 74 in the axial direction is located outside the cylindrical part 66A, and the other end face of the switch pin 74 in the axial direction is located inside the cylindrical part 66A. In this case, the rocker arm 66 and the rocker arm 78 pivot independently when the camshaft 64 rotates. The pivoting of the rocker arm 66 pushes down the two intake valves 62A. The amount of displacement of the two intake valves 62A is based on the cam profile of the rocker arm 66.

The operation of the solenoid 72 causes the output shaft 72A to push the switch pin 74 in the left and right direction of the vehicle against the biasing force of the coil spring 76. Consequently, as shown in FIG. 12, the switch pin 74 is inserted through the cylindrical part 78A. As a result, the rocker arm 66 and the rocker arm 78 pivot integrally when the camshaft 64 rotates. The pivoting of the rocker arm 66 pushes down the two intake valves 62A. The amount of displacement of the two intake valves 62A is based on the cam profile of the rocker arm 78.

The straddle-type vehicle 10 comprises the body frame 14, the body cover 20, the seat 21, and the engine unit 22. The body cover 20 covers the body frame 14. The seat 21 is supported by the body frame 14. The engine unit 22 is disposed so as to be capable of pivoting with respect to the body frame 14, and is located under the seat 21. The body frame 14 includes the left frame 14C (left frame component) and the right frame 14D (right frame component). The left frame 14C extends in the front-to-rear direction of the vehicle. The right frame 14D extends in the front-to-rear direction of the vehicle, and is located to the right of the left frame 14C in the left and right direction of the vehicle. The left frame 14C includes the middle part 30B (lower frame component) and the inclined part 30C (inclined frame component). The right frame 14D includes the middle part 32B (lower frame component) and the inclined part 32C (inclined frame component). The middle part 30B extends farther forward than the engine unit 22 in the front-to-rear direction of the vehicle. The middle part 32B also extends farther forward than the engine unit 22 in the front-to-rear direction of the vehicle. The inclined part 30C extends upward and rearward from the rear end of the middle part 30B. The inclined part 32C extends rearward and upward from the rear end of the middle part 32B. The body cover 20 includes the foot boards 44B and 46B (foot rest components). The foot board 44B is located lower than the seat 21, and at least part of it is superposed with the middle part 30B in a plan view of the vehicle. The foot board 46B is located lower than the seat 21, and at least part of it is superposed with the middle part 32B in a plan view of the vehicle. The engine unit 22 comprises the cylinder component 56, the two intake valves 62A (valves), and the variable valve mechanism 70. The two intake valves 62A open and close the intake passage 58A formed in the cylinder component 56. The variable valve mechanism 70 switches the amount of displacement of the two intake valves 62A. The variable valve mechanism 70 includes the solenoid 72. The solenoid 72 has the output shaft 72A. The solenoid 72 is disposed between the lower-right frame 18B (more specifically, the inclined part 32C) and the cylinder component 56 in a plan view of the vehicle. The output shaft 72A is able to move in a reciprocating manner in the left and right direction of the vehicle. The solenoid 72 is superposed with the inclined part 32C at the lower-right frame 18B in a side view of the vehicle, within the pivot range of the engine unit 22. That is, the solenoid 72 is superposed with the inclined part 32C at the lower-right frame 18B in a side view of the vehicle at any position within the pivot range of the engine unit 22.

As discussed above, with the straddle-type vehicle 10, the solenoid 72 comprises the output shaft 72A. The output shaft 72A is able to move in a reciprocating manner in the left and right direction of the vehicle. The solenoid 72 is disposed to the side of the cylinder component 56. In this case, the variable valve mechanism 70 can transmit the drive force of the solenoid 72 to the member (the switch pin 74) that transmits the drive force of the solenoid 72, without going through any linking mechanism. Therefore, the drive force of the solenoid 72 can be reduced. That is, the solenoid 72 can be made smaller.

With the straddle-type vehicle 10, the engine unit 22 is located under the seat 21. As discussed above, the solenoid 72 can be smaller with the straddle-type vehicle 10. Accordingly, the dimensions of the portion located under the seat 21 can be reduced in the left and right direction of the vehicle with the straddle-type vehicle 10. As a result, there is less of a decrease in the comfort of the rider in moving the vehicle around or in operating it when getting on it. This means that rider comfort can be maintained.

With the straddle-type vehicle 10, the solenoid 72 is disposed between the cylinder component 56 and the lower-right frame 18B in a plan view of the vehicle. The solenoid 72 is superposed with the inclined part 32C within the pivot range of the engine unit 22 in a side view of the vehicle. Therefore, the solenoid 72 can be protected by the body frame 14.

As discussed above, the solenoid 72 can be made smaller with the straddle-type vehicle 10. Therefore, even though the solenoid 72 is disposed so as to be superposed with the inclined part 32C within the pivot range of the engine unit 22 in a side view of the vehicle, that is, at any position within the pivot range of the engine unit 22, there will be less of an increase in the dimensions in the left and right direction of the vehicle of the portion located under the seat 21, and a decrease in rider comfort can be suppressed.

That is, the straddle-type vehicle 10 comprises the variable valve mechanism 70 and is configured such that the engine unit 22 is disposed pivotably with respect to the body frame 14, while the solenoid 72 included in the variable valve mechanism 70 can be protected and rider comfort maintained.

In particular, in this embodiment, the bottom cover 20B is disposed under the solenoid 72. This prevents flying stones and so forth from hitting the solenoid 72 while the vehicle is traveling. It also prevents splashed water and so forth from adhering to the solenoid 72 while the vehicle is traveling.

With the straddle-type vehicle 10, the solenoid 72 is located ahead of the inclined part 32C within the pivot range of the engine unit 22 in a side view of the vehicle. That is, the solenoid 72 is located ahead of the inclined part 32C at any position within the pivot range of the engine unit 22 in a side view of the vehicle. Therefore, the solenoid 72 is protected by the body frame 14.

With the straddle-type vehicle 10, the solenoid 72 is covered by the lower-right side cover 42R in a side view of the vehicle. The solenoid 72 is superposed with the lower-right side cover 42R in a side view of the vehicle. The solenoid 72 is also hidden by the lower-right side cover 42R in a side view of the vehicle. Accordingly, the solenoid 72 is protected not just by the body frame 14, but also by the body cover 20.

The straddle-type vehicle 10 further comprises the pivot shaft 36 and the rear wheel 12R. The pivot shaft 36 is located ahead of the inclined part 32C in a side view of the vehicle, and supports the engine unit 22 pivotably with respect to the body frame 14. The rear wheel 12R is located at the rear end of the engine unit 22, and is disposed so as to be able to pivot around the pivot shaft 36 along with the engine unit 22. In a side view of the vehicle, the distance D1 between the solenoid 72 and the pivot shaft 36 is shorter than the distance D2 between the rear wheel 12R and the pivot shaft 36.

The pivot range of the engine unit 22 is determined by the pivot range of the rear wheel 12R in the up and down direction. When the pivot range of the rear wheel 12R in the up and down direction is determined, the pivot range of the solenoid 72 is smaller with the above configuration. This makes it easier to protect the solenoid 72. Also, since the pivot range of the solenoid 72 is small, there is greater latitude in the layout of the other members. This helps keep the vehicle from becoming larger, which results in better rider comfort.

With the straddle-type vehicle 10, the solenoid 72 is located higher than the axis L1 of the cylinder component 56 in a side view of the vehicle.

In this case, the solenoid 72 is disposed away from the ground. Accordingly, it is less likely that flying stones or the like will hit the solenoid 72 while the vehicle is traveling. It is also less likely that splashed water or the like will adhere to the solenoid 72 while the vehicle is traveling. This makes it easier to protect the solenoid 72.

With the straddle-type vehicle 10, the body cover 20 includes the guide holes 48 (guide components) and the discharge component 50. The guide holes 48 are formed ahead of the engine unit 22, and guide ram air into the body cover 20. The discharge component 50 is formed at a location that is superposed with the engine unit 22 in a side view of the vehicle. The discharge component 50 discharges to the rear the ram air guided from the guide holes 48 into the body cover 20.

In this case, the ram air guided from the guide holes 48 into the body cover 20 is discharged rearward through the discharge component 50. Accordingly, the solenoid 72 can be cooled by ram air.

The drive force of the solenoid 72 is lowered by generated heat, but the solenoid 72 can be cooled as mentioned above in the straddle-type vehicle 10. Therefore, the solenoid 72 does not have to be made larger in order to ensure adequate drive force. As a result, this avoids an increase in the size of the portion located under the seat 21 in the left and right direction of the vehicle.

With the straddle-type vehicle 10, the guide holes 48 are located lower than the seat 21 in a side view of the vehicle.

In this case, the guide holes 48 can be formed at locations that are close to or superposed with the solenoid 72 in the up and down direction of the vehicle. This makes it easier for ram air to hit the solenoid 72. As a result, the solenoid 72 is more readily cooled. Therefore, an increase in the size of the solenoid 72 can be suppressed, which maintains rider comfort.

With the straddle-type vehicle 10, the guide holes 48 are located ahead of the foot boards 44B and 46B in a side view of the vehicle. The ram air guided from the guide holes 48 into the body cover 20 passes under the foot boards 44B and 46B.

In this case, ram air guided from the guide holes 48 into the body cover 20 flows rearward after being split in the left and right direction of the vehicle. Accordingly, ram air is more likely to hit the solenoid 72 disposed to the side of the cylinder component 56, and as a result, the solenoid 72 is more readily cooled. Therefore, an increase in the size of the solenoid 72 can be suppressed, which allows rider comfort to be maintained.

The straddle-type vehicle 10 further comprises the fuel tank 24. With the straddle-type vehicle 10, the right side cover 20R is superposed with the fuel tank 24 and the solenoid 72 in a side view of the vehicle, and is disposed away from the fuel tank 24 and the solenoid 72 in the left and right direction of the vehicle. The two guide holes 48 are located ahead of the fuel tank 24 in a side view of the vehicle.

In this case, some of the ram air passes between the right side cover 20R and the fuel tank 24. Accordingly, even though the fuel tank 24 is disposed ahead of the engine unit 22, the ram air can still cool the solenoid 72. Therefore, an increase in the size of the solenoid 72 can be suppress, which allows driver comfort to be maintained.

With the straddle-type vehicle 10, in the left and right direction of the vehicle, the solenoid 72 is disposed closer to the right frame 14D than the center of the fuel tank 24 in the left and right direction of the vehicle.

In this case, of the ram air guided from the guide holes 48 into the body cover 20, the ram air that has passed between the right side cover 20R and the fuel tank 24 more readily comes into contact with the solenoid 72. Accordingly, the solenoid 72 is easier to cool. Therefore, an increase in the size of the solenoid 72 can be suppressed, which allows driver comfort to be maintained.

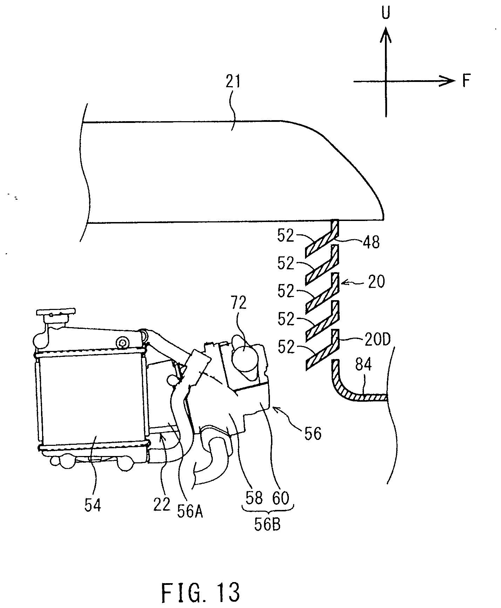

As shown in FIG. 13, for example, the guide holes 48 may be formed in an under-seat cover 20D. The under-seat cover 20D demarcates the space under the seat 21 and the space above a foot board 84 in the front-to-rear direction of the vehicle. The guide holes 48 are partitioned in the up and down direction by a plurality of fins 52.

Again in the case shown in FIG. 13, the solenoid 72 can be cooled because ram air can be guided from the guide holes 48 into the body cover 20.

An embodiment of the present invention was described above, but the above embodiment is just an example of how the present invention is worked. Thus, the present invention is not limited to or by the above embodiment, and the above embodiment can be suitably modified without departing from the gist of the invention.

For instance, the left frame component and the right frame component may be connected to each other at a component farther forward than the lower frame component.

The body frame of the present invention should comprise a left frame component and a right frame component, but the configuration and shape thereof are not limited to what was discussed in the above embodiment. In the above embodiment, the body frame 14 included the upper-left frame 16A, the lower-left frame 16B, the upper-right frame 18A, and the lower-right frame 18B, but may not include the upper-left frame 16A and the upper-right frame 18A, for example.

The lower-right frame should extend in the front-to-rear direction of the vehicle. In the above embodiment, the lower-right frame 18B was connected to the front frame 14B, but may instead be connected to the head pipe 14A, for example.

The solenoid of the present invention should comprise an output shaft capable of moving in a reciprocating manner in the left and right direction of the vehicle. In the above embodiment, the solenoid 72 was attached to the head cover 60, but may instead be attached to the cylinder head 56B, for example. In the above embodiment, the solenoid 72 was disposed between the right frame 18 and the cylinder component 56 in a plan view of the vehicle, but may instead be disposed between the left frame 16 and the cylinder component 56 in a plan view of the vehicle.

The body cover of the present invention should cover the body frame, but its configuration and shape are not limited to what was discussed in the above embodiment. In the above embodiment, the body cover 20 included the upper-left side cover 40L, the lower-left side cover 42L, the upper-right side cover 40R, the lower-right side cover 42R, and the front cover 20F, but may instead be constituted by a single member, for example, and the configuration may be different from that in the above embodiment.

The foot rest component of the present invention should be formed on the body cover, but is not limited to what was given in the above embodiment. In the above embodiment, the foot rest component was formed on the lower-left side cover 42L and the lower-right side cover 42R, but may instead be formed on a foot rest cover connected to the lower part of the side cover, or may be formed on a cover composed of a single member that includes left and right foot boards.

The location of the pivot shaft of the present invention is not limited to what was given in the above embodiment. In the above embodiment, the pivot shaft was located above the engine unit 22 in a side view of the vehicle, but may instead be located under the engine unit in a side view of the vehicle. In this case, the engine unit will be able to pivot around the pivot shaft located below it, and will pivot by means of the expansion and contraction of the rear suspension.

The variable valve mechanism of the present invention should be able to switch the amount of displacement of the valves disposed in the engine unit, but its configuration and so forth are not limited to what was given in the above embodiment. In the above embodiment, the variable valve mechanism 70 switched the amount of displacement of the intake valves 62A, but may instead switch the amount of displacement of the exhaust valves 62B. In the above embodiment, the amount of displacement of the two intake valves 62A was switched, but amount of displacement of just one intake valve 62A may be switched, for example. Also, the variable valve mechanism of the present invention may switch between a state in which a valve can be displaced and a state in which it cannot be displaced, for example. The variable valve mechanism of the present invention may also switch between the amount of displacement of an intake valve and the amount of displacement of an exhaust valve.

The guide component of the present invention should be able to guide ram air into the body cover, but its configuration and shape are not limited to what was given in the above embodiment. In the above embodiment, the guide holes 48 serving as the guide component were equipped with the plurality of fins 52, but the guide component may instead be a plurality of openings not equipped with fins, or may be a single opening equipped with fins. The guide component of the present invention may be an opening that extends in the up and down direction, or may be an opening that extends in the left and right direction. If the guide component consists of a plurality of openings, then they may be aligned in the up and down direction or in the left and right direction.

In the present invention, the phrase "extends in a certain direction" encompasses not only a direction that matches said certain direction, but also one having a component of said certain direction. Examples of this certain direction include the front-to-rear direction, the left and right direction, the up and down direction, upward, downward, rearward and upward, forward and upward, and so forth.

## Claims

1. A straddle-type vehicle (10), comprising:
a body frame (12);
a body cover (20) covering the body frame (12);
a seat (21) supported by the body frame (12); and
an engine unit (22) disposed so as to be capable of pivoting with respect to the body frame (12), and located under the seat (21),
wherein the body frame (12) includes:
a left frame component (14C) extending in the front-to-rear direction of the vehicle; and
a right frame component (14D) extending in the front-to-rear direction of the vehicle and located to the right of the left frame component (14C) in the left and right direction of the vehicle,
the left frame component (14C) and the right frame component (14D) each include:
a lower frame component (30B; 32B) extending in the front-to-rear direction, ahead of the engine unit (22); and
an inclined frame component (30C; 32C) extending rearward and upward from a rear end of the lower frame component (30B; 32B),
the body cover (20) includes a foot rest component (44B; 46B) located lower than the seat (21),
the engine unit (22) comprises:
a cylinder (56); and
a valve (62A; 62B) for opening and closing an intake passage (58A) or exhaust passage (58B) formed in the cylinder (56);
**characterized by**
at least part of the foot rest component (44B; 46B) being superposed with the lower frame component (30B; 32B) in a plan view of the vehicle (10), and
the engine unit further comprising:
a variable valve mechanism (70) for switching the amount of displacement of the valve (62A; 62B),
wherein the variable valve mechanism (70) includes a solenoid (72) disposed between the cylinder (56) and either the left frame component (14C) or the right frame component (14D) in a plan view of the vehicle (10), and having an output shaft (72A) capable of moving in a reciprocating manner in the left and right direction of the vehicle (10), and the solenoid (72) superposed with the inclined frame component (30C; 32C) of either the left frame component (14C) or the right frame component (14D) in a side view of the vehicle (10), within the pivoting range of the engine unit (22).

2. The straddle-type vehicle (10) according to Claim 1, wherein the solenoid (72) is located in front of the inclined frame component (30C; 32C) of either the left frame component (14C) or the right frame component (14D) in a side view of the vehicle (10), within the pivoting range of the engine unit (22).

3. The straddle-type vehicle (10) according to Claim 1 or 2, further comprising:
a pivot shaft (36) located in front of the inclined frame component (30C; 32C) of either the left frame component (14C) or the right frame component (14D) in a side view of the vehicle, and supporting the engine unit pivotably with respect to the body frame; and
a rear wheel (12R) located at the rear end of the engine unit (22), and disposed so as to be capable of pivoting around the pivot shaft (36) along with the engine unit (22),
wherein the distance (D1) between the axis of the solenoid (72) and the axis of the pivot shaft (36) is preferably shorter than the distance (D2) between the axis of the rear wheel (12R) and the axis of the pivot shaft (36) in a side view of the vehicle (10).

4. The straddle-type vehicle (10) according to any of Claims 1 to 3, wherein the solenoid (72) is located higher than the axis of the cylinder (56) in a side view of the vehicle (10).

5. The straddle-type vehicle (10) according to any of Claims 1 to 4, wherein the body cover (20) further includes:
a left side cover component (20L) disposed to the left of the left frame component (14C) in the left and right direction of the vehicle (10), at least part of the left side cover component (20L) being superposed with the left frame component (14C) in a side view of the vehicle (10); and
a right side cover component (20R) disposed to the right of the right frame component (14D) in the left and right direction of the vehicle (10), at least part of the right side cover component (20R) being superposed with the right frame component (14D) in a side view of the vehicle (10), and
of the left side cover component (20L) and the right side cover component (20R), the one disposed closer to either the left frame component (14C) or the right frame component (14D) in the left and right direction of the vehicle (10) is preferably superposed with the solenoid (72) in a side view of the vehicle (10).

6. The straddle-type vehicle (10) according to any of Claims 1 to 4, wherein the body cover (20) includes a guide component (48) formed in front of the engine unit (22) and configured to guide ram air into the body cover (20).

7. The straddle-type vehicle (10) according to Claim 6, wherein the body cover (20) includes a discharge component (50) formed at a position superposed with the engine unit (22) in a side view of the vehicle (10) and configured to discharge rearward any ram air introduced from the guide component (48) into the body cover (20).

8. The straddle-type vehicle (10) according to Claim 6 or 7, wherein the guide component (48) is located under the seat (21) in a side view of the vehicle (10).

9. The straddle-type vehicle (10) according to any one of Claims 6 to 8, wherein the guide component (48) is located in front of the foot rest component (44B; 46B) in a side view of the vehicle and is preferably configured such that the ram air introduced from the guide component (48) into the body cover (20) passes under the foot rest component.

10. The straddle-type vehicle (10) according to any one of Claims 6 to 9, further comprising a fuel tank (24) disposed in front of the engine unit (22),
wherein the body cover (20) further includes:
a left side cover component (20L) disposed to the left of the left frame component (14C) in the left and right direction of the vehicle (10), and at least part of which is superposed with the left frame component (14C) in a side view of the vehicle (10); and
a right side cover component (20R) disposed to the right of the right frame component (14D) in the left and right direction of the vehicle (10), and at least part of which is superposed with the right frame component (14D) in a side view of the vehicle (10),
of the left side cover component (20L) and the right side cover component (20R), the one disposed closer to either the left frame component (14C) or the right frame component (14D) in the left and right direction of the vehicle (10) is preferably superposed with the fuel tank (24) and the solenoid (72) in a side view of the vehicle (10), and is preferably disposed away from the fuel tank (24) and the solenoid (72) in the left and right direction of the vehicle (10).

11. The straddle-type vehicle (10) according to Claim 10, wherein the guide component (48) is located in front of the fuel tank (24) in a side view of the vehicle (10).

12. The straddle-type vehicle (10) according to Claim 10 or 11, wherein the solenoid (72) is located closer, in the left and right direction of the vehicle (10), to either the left frame component (14C) or the right frame component (14D) than the center of the fuel tank (24) in the left and right direction of the vehicle (10).

13. The straddle-type vehicle (10) according to any one of Claims 6 to 12, wherein the body cover (20) further includes an under-seat cover component (20D) separating the space under the seat (21) and the space above the foot rest component (44B; 46B) in the front-to-rear direction of the vehicle (10).

14. The straddle-type vehicle (10) according to Claim 13, wherein the guide component (48) is formed in the under-seat cover component (20D).

15. The straddle-type vehicle (10) according to any one of Claims 6 to 14, wherein guide component (48) comprises a guide hole (48) or a plurality of guide holes (48), and the guide hole/s (48) is/are preferably equipped with a plurality of fins (52).

## Patentansprüche

1. Spreizsitz-Fahrzeug (10), das umfasst:
einen Karosserie-Rahmen (12);
eine Karosserie-Verkleidung (20), die den Karosserie-Rahmen (12) verkleidet;
einen Sitz (21), der von dem Karosserie-Rahmen (12) getragen wird; sowie
eine Motor-Einheit (22), die so angeordnet ist, dass sie in Bezug auf den Karosserie-Rahmen (12) geschwenkt werden kann, und die sich unter dem Sitz (21) befindet,
wobei der Karosserie-Rahmen (12) enthält:
eine linke Rahmen-Komponente (14C), die sich in der Längsrichtung des Fahrzeugs erstreckt; sowie
eine rechte Rahmen-Komponente (14D), die sich in der Längsrichtung des Fahrzeugs erstreckt und sich, in der Querrichtung des Fahrzeugs, rechts von der linken Rahmen-Komponente (14C) befindet,
wobei die linke Rahmen-Komponente (14C) und die rechte Rahmen-Komponente (14D) jeweils enthalten:
eine untere Rahmen-Komponente (30B; 32B), die sich, in der Längsrichtung, vor der Motor-Einheit (22) erstreckt; sowie
eine geneigte Rahmen-Komponente (30C; 32C), die sich von einem hinteren Ende der unteren Rahmen-Komponente (30B; 32B) nach hinten und nach oben erstreckt,
wobei die Karosserieverkleidung (20) eine Fußstützen-Komponente (44B; 46B) enthält, die tiefer liegt als der Sitz (21),
und die Motor-Einheit (22) umfasst:
einen Zylinder (56); sowie
ein Ventil (62A; 62B) zum Öffnen und Schließen eines Einlasskanals (58A) oder eines Auslasskanals (58B), die in dem Zylinder (56) ausgebildet sind;
**dadurch gekennzeichnet, dass**
wenigstens ein Teil der Fußstützen-Komponente (44B; 46B), in einer Draufsicht auf das Fahrzeug (10), sich mit der unteren Rahmen-Komponente (30B; 32B) überlagert, und
die Motor-Einheit des Weiteren umfasst:
einen variablen Ventilmechanismus (70), mit dem das Maß der Verschiebung des Ventils (62A; 62B) umgestellt wird,
wobei der variable Ventilmechanismus (70) ein Solenoid (72) enthält, das, in einer Draufsicht auf das Fahrzeug (10), zwischen dem Zylinder (56) und entweder der linken Rahmen-Komponente (14C) oder der rechten Rahmen-Komponente (14D) angeordnet ist und eine Ausgangswelle (72A) hat, die in der Lage ist, sich in der Querrichtung des Fahrzeugs (10) hin- und herzubewegen, und
das Solenoid (72), in einer Seitenansicht des Fahrzeugs (10), sich mit der geneigten Rahmen-Komponente (30C; 32C) entweder der linken Rahmen-Komponente (14C) oder der rechten Rahmen-Komponente (14D) innerhalb des Schwenkbereiches der Motor-Einheit (22) überlagert.

2. Spreizsitz-Fahrzeug (10) nach Anspruch 1, wobei sich das Solenoid (72), in einer Seitenansicht des Fahrzeugs (10), innerhalb des Schwenkbereiches der Motor-Einheit (22) vor der geneigten Rahmen-Komponente (30C; 32C) entweder der linken Rahmen-Komponente (14C) oder der rechten Rahmen-Komponente (14D) befindet.

3. Spreizsitz-Fahrzeug (10) nach Anspruch 1 oder 2, das des Weiteren umfasst:
eine Schwenk-Welle (36), die sich, in einer Seitenansicht des Fahrzeugs, vor der geneigten Rahmen-Komponente (30C; 32C) entweder der linken Rahmen-Komponente (14C) oder der rechten Rahmen-Komponente (14D) befindet und die Motor-Einheit in Bezug auf den Karosserie-Rahmen schwenkbar trägt; sowie
ein Hinterrad (12R), das sich an dem hinteren Ende der Motor-Einheit (22) befindet und so angeordnet ist, dass es zusammen mit der Motor-Einheit (22) um die Schwenk-Welle (36) herum geschwenkt werden kann,
wobei der Abstand (D1) zwischen der Achse des Solenoids (72) und der Achse der Schwenk-Welle (36), in einer Seitenansicht des Fahrzeugs (10), vorzugsweise kürzer ist als der Abstand (D2) zwischen der Achse des Hinterrades (12R) und der Achse der Schwenk-Welle (36).

4. Spreizsitz-Fahrzeug (10) nach einem der Ansprüche 1 bis 3, wobei das Solenoid (72), in einer Seitenansicht des Fahrzeugs (10), höher liegt als die Achse des Zylinders (56).

5. Spreizsitz-Fahrzeug (10) nach einem der Ansprüche 1 bis 4, wobei die Karosserie-Verkleidung (20) des Weiteren enthält:
eine Verkleidungs-Komponente (20L) der linken Seite, die, in der Querrichtung des Fahrzeugs (10), links von der linken Rahmen-Komponente (14C) angeordnet ist, wobei sich wenigstens ein Teil der Verkleidungs-Komponente (20L) der linken Seite, in einer Seitenansicht des Fahrzeugs (10), mit der linken Rahmen-Komponente (14C) überlagert; sowie
eine Verkleidungs-Komponente (20R) der rechten Seite, die, in der Querrichtung des Fahrzeugs (10), rechts von der rechten Rahmen-Komponente (14D) angeordnet ist, wobei sich wenigstens ein Teil der Verkleidungs-Komponente (20R) der rechten Seite, in einer Seitenansicht des Fahrzeugs (10), mit der rechten Rahmen-Komponente (14D) überlagert, und
von der Verkleidungs-Komponente (20L) der linken Seite und der Verkleidungs-Komponente (20R) der rechten Seite diejenige, die, in der Querrichtung des Fahrzeugs (10), näher an der linken Rahmen-Komponente (14C) oder der rechten Rahmen-Komponente (14D) angeordnet ist, sich, in einer Seitenansicht des Fahrzeugs (10), mit dem Solenoid (72) überlagert.

6. Spreizsitz-Fahrzeug (10) nach einem der Ansprüche 1 bis 4, wobei die Karosserie-Verkleidung (20) eine Leit-Komponente (48) enthält, die vor der Motor-Einheit (22) ausgebildet und so ausgeführt ist, dass sie Stauluft in die Karosserie-Verkleidung (20) einleitet.

7. Spreizsitz-Fahrzeug (10) nach Anspruch 6, wobei die Karosserie-Verkleidung (20) eine Ableit-Komponente (50) enthält, die, in einer Seitenansicht des Fahrzeugs (10), an einer Position ausgebildet ist, die sich mit der Motor-Einheit (22) überlagert, und die so ausgeführt ist, dass sie jegliche von der Gleit-Komponente (48) in die Karosserie-Verkleidung (20) eingeleitete Stauluft nach hinten ableitet.

8. Spreizsitz-Fahrzeug (10) nach Anspruch 6 oder 7, wobei sich die Leit-Komponente (48), in einer Seitenansicht des Fahrzeugs (10), unter dem Sitz (21) befindet.

9. Spreizsitz-Fahrzeug (10) nach einem der Ansprüche 6 bis 8, wobei sich die Leit-Komponente (48), in einer Seitenansicht des Fahrzeugs, vor der Fußstützen-Komponente (44B; 46B) befindet und vorzugsweise so ausgeführt ist, dass die von der Leit-Komponente (48) in die Karosserie-Verkleidung (20) eingeleitete Stauluft unter der Fußstützen-Komponente strömt.

10. Spreizsitz-Fahrzeug (10) nach einem der Ansprüche 6 bis 9, das des Weiteren einen Kraftstofftank (24) umfasst, der vor der Motor-Einheit (22) angeordnet ist,
wobei die Karosserie-Verkleidung (20) des Weiteren enthält:
eine Verkleidungs-Komponente (20L) der linken Seite, die, in der Querrichtung des Fahrzeugs (10), links von der linken Rahmen-Komponente (14C) angeordnet ist, wobei sich wenigstens ein Teil derselben, in einer Seitenansicht des Fahrzeugs (10), mit der linken Rahmen-Komponente (14C) überlagert; sowie
eine Verkleidungs-Komponente (20R) der rechten Seite, die, in der Querrichtung des Fahrzeugs (10), rechts von der rechten Rahmen-Komponente (14D) angeordnet ist, wobei sich wenigstens ein Teil derselben, in einer Seitenansicht des Fahrzeugs (10), mit der rechten Rahmen-Komponente (14D) überlagert, und
von der Verkleidungs-Komponente (20L) der linken Seite und der Verkleidungs-Komponente (20R) der rechten Seite diejenige, die, in der Querrichtung des Fahrzeugs (10), näher an der linken Rahmen-Komponente (14C) oder der rechten Rahmen-Komponente (14D) angeordnet ist, sich, in einer Seitenansicht des Fahrzeugs (10), vorzugsweise mit dem Kraftstofftank (24) und dem Solenoid (72) überlagert und, in der Querrichtung des Fahrzeugs (10), vorzugsweise entfernt von dem Kraftstofftank (24) und dem Solenoid (72) angeordnet ist.

11. Spreizsitz-Fahrzeug (10) nach Anspruch 10, wobei sich die Leit-Komponente (48), in einer Seitenansicht des Fahrzeugs (10), vor dem Kraftstofftank (24) befindet.

12. Spreizsitz-Fahrzeug (10) nach Anspruch 10 oder 11, wobei sich das Solenoid (72), in der Querrichtung des Fahrzeugs (10), näher entweder an der linken Rahmen-Komponente (14C) oder der rechten Rahmen-Komponente (14D) befindet als die Mitte des Kraftstofftanks (24) in der Querrichtung des Fahrzeugs (10).

13. Spreizsitz-Fahrzeug (10) nach einem der Ansprüche 6 bis 12, wobei die Karosserie-Verkleidung (20) des Weiteren eine Verkleidungs-Komponente (20D) unter dem Sitz enthält, die den Raum unter dem Sitz (21) und den Raum über der Fußstützen-Komponente (44B; 46B), in der Längsrichtung des Fahrzeugs (10), trennt.

14. Spreizsitz-Fahrzeug (10) nach Anspruch 13, wobei die Leit-Komponente (48) in der Verkleidungs-Komponente (20D) unter dem Sitz ausgebildet ist.

15. Spreizsitz-Fahrzeug (10) nach einem der Ansprüche 6 bis 14, wobei die Leit-Komponente (48) ein Leitloch (48) oder eine Vielzahl von Leitlöchern (48) umfasst und das Führungsloch/die Führungslöcher (48) vorzugsweise mit einer Vielzahl von Rippen (52) versehen ist/sind.

## Revendications

1. Véhicule à selle (10) comprenant :
un cadre (12),
un carénage (20) recouvrant le cadre (12),
un siège (21) supporté par le cadre (12), et
une unité de motorisation (22) disposée de sorte à pouvoir pivoter par rapport au cadre (12) et située en dessous du siège (21),
dans lequel le cadre (12) inclut :
un composant de cadre gauche (14C), s'étendant dans la direction avant arrière du véhicule, et
un composant de cadre droit (14D) s'étendant dans la direction avant arrière du véhicule et situé à la droite du composant de cadre gauche (14C) dans la direction gauche droite du véhicule,
le composant de cadre gauche (14C) et le composant de cadre droit (14D) incluant chacun :
un composant de cadre inférieur (30B ; 32B) s'étendant dans la direction avant arrière en avant de l'unité de motorisation (22), et
un composant de cadre incliné (30C ; 32C) s'étendant vers l'arrière et vers le haut depuis l'extrémité arrière du composant de cadre inférieur (30B ; 32B),
le carénage (20) inclut un composant de repos de pied (44B ; 46B) situé plus bas que le siège (21),
l'unité de motorisation (22) comprend :
un cylindre (56), et
une soupape (62A ; 62B) destinée à ouvrir et fermer un passage d'admission (58A) ou un passage d'échappement (58B) formés dans le cylindre (56),
**caractérisé par :**
une partie au moins du composant de repos de pied (44B ; 46B) étant superposée au composant de cadre inférieur (30B ; 32B) dans une vue de plan du véhicule (10), et
l'unité de motorisation comprenant en outre :
un mécanisme de soupape variable (70) permettant de commuter la quantité de déplacement de la soupape (62A ; 62B),
le mécanisme de soupape variable (70) incluant une bobine solénoïde (72) disposée entre le cylindre (56) et, soit le composant de cadre gauche (14C), soit le composant de cadre droit (14D) dans une vue en plan du véhicule (10), et comportant un arbre de sortie (72A) pouvant se déplacer en va-et-vient dans la direction gauche droite du véhicule (10), et
la bobine solénoïde (112) étant superposée avec le composant de cadre incliné (30C ; 32C) appartenant soit au composant de cadre gauche (14C), soit au composant de cadre droit (14D) dans une vue latérale du véhicule (10), dans la plage de pivotement de l'unité de motorisation (22).

2. Véhicule à selle (10) selon la revendication 1, dans lequel la bobine solénoïde (112) est située en face du composant de cadre incliné (30C ; 32C) appartenant soit au composant de cadre gauche (14C), soit au composant de cadre droit (14D) dans une vue latérale du véhicule (10), dans la plage de pivotement de l'unité de motorisation (22).

3. Véhicule à selle (10) selon la revendication 1 ou la revendication 2, comprenant en outre :
un arbre de pivot (36) situé en face du composant de cadre incliné (30C ; 32C) appartenant soit au composant de cadre gauche (14C), soit au composant de cadre droit (14D) dans une vue latérale du véhicule, et supportant l'unité de motorisation pour qu'elle puisse pivoter par rapport au cadre, et
une roue arrière (12R) située à l'arrière de l'unité de motorisation (22) et disposée pour pouvoir pivoter autour de l'arbre de pivot (36) avec l'unité de motorisation (22),
dans lequel la distance (D1) entre l'axe de la bobine solénoïde (72) et l'axe de l'arbre de pivot (36) est de préférence plus courte que la distance (D2) entre l'axe de la roue arrière (12R) et l'axe de l'arbre de pivot (36) dans une latérale du véhicule (10).

4. Véhicule à selle (10) selon l'une quelconque des revendications 1 à 3, dans lequel la bobine solénoïde (72) est située plus haut que l'axe du cylindre (56) dans une vue latérale du véhicule (10).

5. Véhicule à selle (10) selon l'une quelconque des revendications 1 à 4, dans lequel le carénage (20) inclut en outre :
un composant formant capot gauche (20L) disposé à la gauche du composant de cadre gauche (14C) dans la direction gauche droite du véhicule (10), une partie au moins du composant formant capot gauche (20L) étant superposée au composant de cadre gauche (14C) dans une vue latérale du véhicule (10), et
un composant formant capot droit (20R) disposé à la droite du composant de cadre droit (14D) dans la direction gauche droite du véhicule (10), une partie au moins du composant formant capot droit (20R) étant superposée au composant de cadre droit (14D) dans une vue latérale du véhicule (10), et
parmi le composant formant capot gauche (20L) et le composant formant capot droit (20R), celui qui est le plus proche, soit du composant de cadre gauche (14C), soit du composant de cadre droit (14D) dans la direction gauche droite du véhicule (10), est de préférence superposé à la bobine solénoïde (72) dans une vue latérale du véhicule (10).

6. Véhicule à selle (10) selon l'une quelconque des revendications 1 à 4, dans lequel le carénage (20) inclut un composant de guidage (48) formé en face de l'unité de motorisation (22) et configuré pour guider l'air dynamique dans le carénage (20).

7. Véhicule à selle (10) selon la revendication 6, dans lequel le carénage (20) inclut un composant d'évacuation (50) formé à une position qui est superposée à l'unité de motorisation (22) dans une vue latérale du véhicule (10) et configurée pour évacuer vers l'arrière tout l'air dynamique introduit par le composant de guidage (48) dans le carénage (20).

8. Véhicule à selle (10) selon la revendication 6 ou la revendication 7, dans lequel le composant de guidage (48) est situé en dessous du siège (21) dans une vue latérale du véhicule (10).

9. Véhicule à selle (10) selon l'une quelconque des revendications 6 à 8, dans lequel le composant de guidage (48) est situé en face du composant de repos de pied (44B ; 46B) dans une vue latérale de véhicule, et il est de préférence configuré de sorte à ce que l'air dynamique introduit depuis le composant de guidage (48) dans le carénage (20) passe sous le composant de repos de pied.

10. Véhicule à selle (10) selon l'une quelconque des revendications 6 à 9, comprenant en outre un réservoir de carburant (24) disposé en face de l'unité de motorisation (22),
dans lequel le carénage (20) inclut en outre :
un composant formant capot gauche (20L) disposé à la gauche du composant de cadre gauche (14C) dans la direction gauche droite du véhicule (10), au moins une partie de celui-ci étant superposée au composant de cadre gauche (14C) dans une vue latérale du véhicule (10), et
un composant formant capot droit (20R) disposé à la droite du composant de cadre droit (14D) dans la direction gauche droite du véhicule (10), au moins une partie de celui-ci étant superposée au composant de cadre droit (14D) dans une vue latérale du véhicule (10),
parmi le composant formant capot gauche (20L) et le composant formant capot droit (20R), celui qui est le plus proche, soit du composant de cadre gauche (14C), soit du composant de cadre droit (14D) dans la direction gauche droite du véhicule (10), est de préférence superposé au réservoir de carburant (24) et à la bobine solénoïde (72) dans une vue latérale du véhicule (10), et il est disposé de préférence à distance du réservoir de carburant (24) et de la bobine solénoïde (72) dans la direction gauche droite du véhicule (10).

11. Véhicule à selle (10) selon la revendication 10, dans lequel le composant de guidage (48) est situé en face du réservoir de carburant (24) dans une vue latérale du véhicule (10).

12. Véhicule à selle (10) selon la revendication 10 ou la revendication 11, dans lequel la bobine solénoïde (72) est située pour être plus proche, dans la direction gauche droite du véhicule (10), soit du composant de cadre gauche (14C), soit du composant de cadre droit (14D) que le centre du réservoir de carburant (24) dans la direction gauche droite du véhicule (10).

13. Véhicule à selle (10) selon l'une quelconque des revendications 6 à 12, dans lequel le carénage (20) inclut en outre un composant formant capot sous le siège (20D) séparant l'espace sous le siège (21) et l'espace au-dessus du composant de repos de pied (44B ; 46B) dans la direction avant arrière du véhicule (10).

14. Véhicule à selle (10) selon la revendication 13, dans lequel le composant de guidage (48) est formé dans le composant formant capot sous le siège (20D).

15. Véhicule à selle (10) selon l'une quelconque des revendications 6 à 14, dans lequel le composant de guidage (48) comprend un alésage de guidage (48) ou une pluralité d'alésages de guidage (48) ; et le ou les alésages de guidage (48) sont de préférence munis d'une pluralité d'ailettes (52).
